# EUROPEAN PATENT SPECIFICATION

(11) **EP 1 577 143 B1**
(45) Date of publication and mention of the grant of the patent: **23.04.2008**
(21) Application number: 05102072.5
(22) Date of filing: 16.03.2005
(51) Int. Cl.: B60K 15/03, B60K 15/063

(54) **Tank assembly for lorries**
Tankanordnung für LKWs
Ensemble réservoir pour camions

(30) Priority: 17.03.2004 DE 102004103348
(43) Date of publication of application: 21.09.2005
(73) Proprietor: IVECO MAGIRUS AG, D-89079 Ulm (DE)
(72) Inventor: RIECK, Gerhard, 81247, MUENCHEN (DE); HOELZLE, Franz, 89257, ILLERTISSEN (DE); HERRMANN, Olaf, 89155, ERBACH (DE); RITTER, Ingomar, 89233, NEU ULM (DE); SCHEIGER, Martin, 89614, OEPFINGEN (DE)
(74) Representative: Borsano, Corrado

(56) References cited:
- EP-A- 0 802 108
- EP-A- 0 963 901
- FR-A- 929 399
- US-A- 3 227 410
- US-A- 5 380 042

## Description

The invention refers to a tank assembly for tractors of articulated vehicles.

Tanks for tractors are conventionally installed in a lateral position on the chassis frame between the axles. This leads to one-sided loading, especially with filled tanks of large volume. If the volume of one tank is insufficient, tanks are installed on both sides. This can lead to no space being available for a spare wheel.

The load resulting from the filled tank at best only partially benefits the driven rear axle. As a result, traction can be a problem.

A further disadvantage of a tank assembly in the position specified is that there is no mounting space available for other uses e.g. for a spare wheel or storage box.

There is also considerable risk that the tank, when mounted in the aforementioned position, lies within the lateral collision area and can fracture after collision with another vehicle. Leaking fuel can, as a result, ignite or drain away into the ground, thereby causing serious damage to the environment.

EP 802108 discloses a truck having a tank assembly with the features of the preamble of claim 1.

The underlying objective of the invention is to make a hitherto little used area of the vehicle available for the installation of the tank.

In order to achieve this objective, a tank assembly according to claim 1 is provided.

The arrangement of a tank at the rear of a tractor of an articulated vehicle, represents above all an improvement in the load distribution as the weight of the tank and its contents are exclusively supported by the rear driving wheels. As a result, the often adverse traction characteristics of tractors are improved.

In this way and above all, road safety on empty runs is also improved. When used in articulated vehicles, for which this invention is primarily suited, the tank is situated in a well-protected area between the tractor and the trailer.

The tank can be made in one piece or can consist of several separate tanks which are connected together. Preferably one fuel tank is situated behind each of the rear wheels respectively, which are attached on each side of the longitudinal members of the chassis frame. Both fuel tanks are preferably connected by means of a bridging section located underneath the ends of the longitudinal members so that the tank appears U-shaped when viewed from the rear. The tank(s) located behind the rear axle can be suitably connected to the conventional laterally mounted fuel tanks, preferably by means of piping. In this way, the lateral fuel tanks can be combined with the mud flaps of the rear wheels to form one unit and can additionally contribute to the containment of spray and the minimisation of the dirtying of the vehicle. Various components or assemblies which are otherwise mounted separately on the chassis can also be integrated in the tank assembly. This also results in an improvement in design, avoiding a disorderly appearance produced by the installation of many individual assemblies on the chassis frame.

The tank can be manufactured out of plastic or sheet metal, particularly steel or aluminium. Attachment to the chassis frame is achieved preferably by means of bolted connections or other mounting devices.

The tank according to the invention can also be installed in addition to a conventional tank assembly. The following explains in more detail, with the aid of the attached drawing, preferred examples of embodiments of the invention.
Fig. 1 is a perspective part view of the rear area of an articulated vehicle with a first embodiment of a tank according to the invention;
Fig. 2 is a top view of Fig. 1;
Fig. 3 shows a rear view of the articulated vehicle in Fig. 1;
Fig. 4 is a side view of the rear area of the articulated vehicle in Fig. 1;
Fig. 5 is a further perspective representation corresponding to a further embodiment of an articulated vehicle;
Fig. 6 is a top view of the rear end of an articulated vehicle according to Fig. 5;
Fig. 7 is a rear view of Fig. 5; and
Fig. 8 is a side view of Fig. 5.

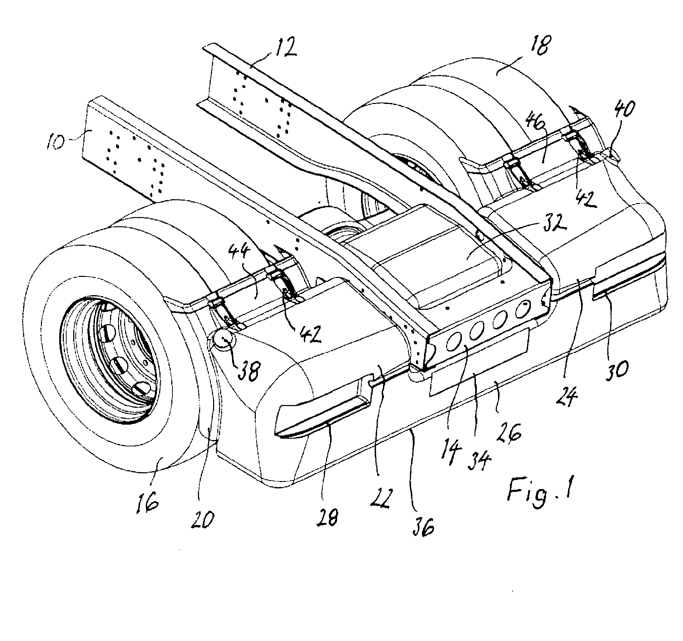

The rear end areas of two parallel longitudinal members 10, 12 of the chassis frame of an articulated vehicle are shown in the representation depicted in Fig. 1.

The rear ends of the longitudinal members 10, 12 are connected together by a transverse connecting section 14. Additionally, Fig. 1 shows the rear wheels 16, 18, whereby this can refer to single or twin wheels. The rear wheels 16, 18 are connected by a rear axle (not shown), running in a transverse direction beneath the longitudinal members 10, 12.

The invention is also applicable to articulated vehicles with two rear axles.

Two fuel tanks 22, 24 are situated behind the rear wheels or the rear sections 20 of the mud flaps respectively. These fuel tanks are connected together by a bridging section 26 which runs beneath the rear ends of the longitudinal members 10, 12 and connects both the fuel tanks 22, 24 into a single unit.

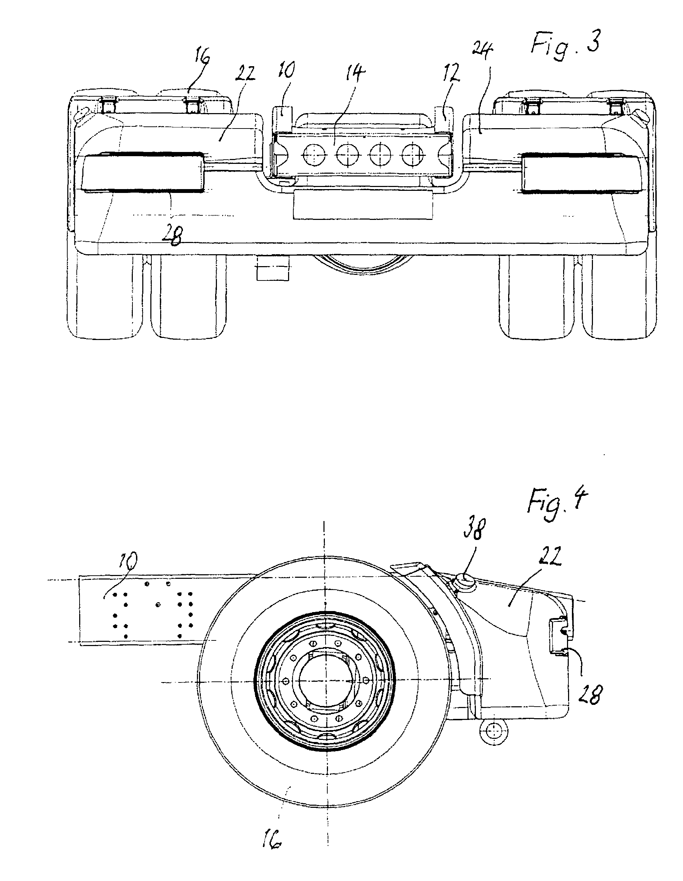

According to Figs. 1 and 3, indentations or cut-outs 28, 30 are provided in both the fuel tanks 22, 24 which are used for the attachment of rear lights (not shown). It is obvious that suitable sealing to the tank interior must be provided here.

A differential housing 32 from which the rear axle emerges on both sides (not shown in detail) is indicated between the rear ends of the longitudinal members 10, 12.

Between the rear ends of the longitudinal members 10, 12 and in front of the connecting section 14, a casing 32 is indicated which can not only be part of the tank but also serve to accommodate other components such as batteries, control valves etc..

Position 34 situated at the rear end of bridging section 26 of the tank is for the attachment of a number plate. A rail integrated into the rear end of the tank serves as protection against damage when reversing the vehicle or during collision with another vehicle. Tank caps 38, 40 are situated at the outer corners of both tanks so that refuelling is possible from both sides.

The tank according to the invention can be mounted at the rear ends of the longitudinal members 10, 12. It can also be connected to the rear sections 44, 46 of the mud flap by means of suitable fittings. The tank can also be attached in a suitable way to the rear ends of the longitudinal members 10, 12 as part of a unit together with the mud flaps.

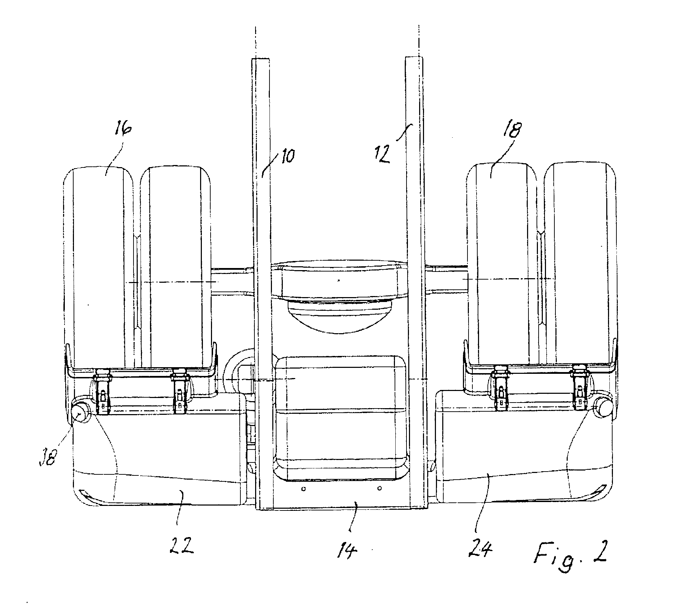

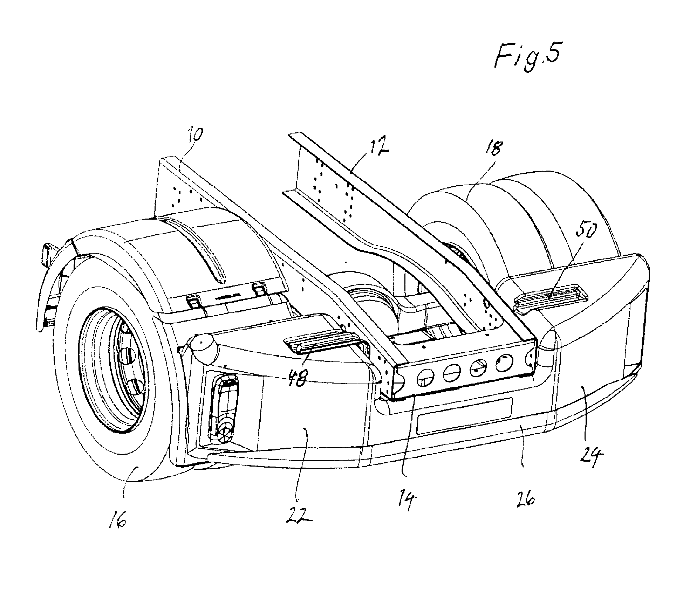

Fig. 5 depicts a second embodiment which shows further details of the concept according to the invention. First of all, both longitudinal members 10, 12 are again shown. The longitudinal members 10, 12 are similarly joined by means of a connecting section 14. The same reference numbers are also used for additional parts shown in a corresponding way in Figs. 1 to 4.

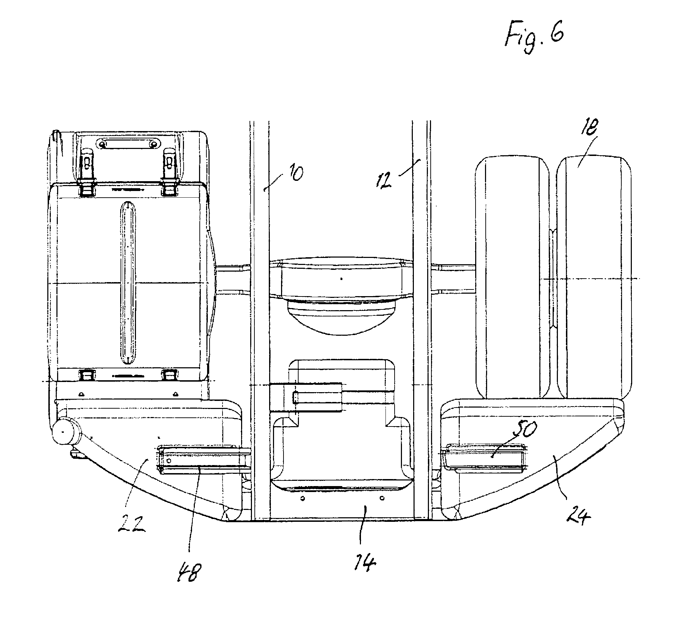

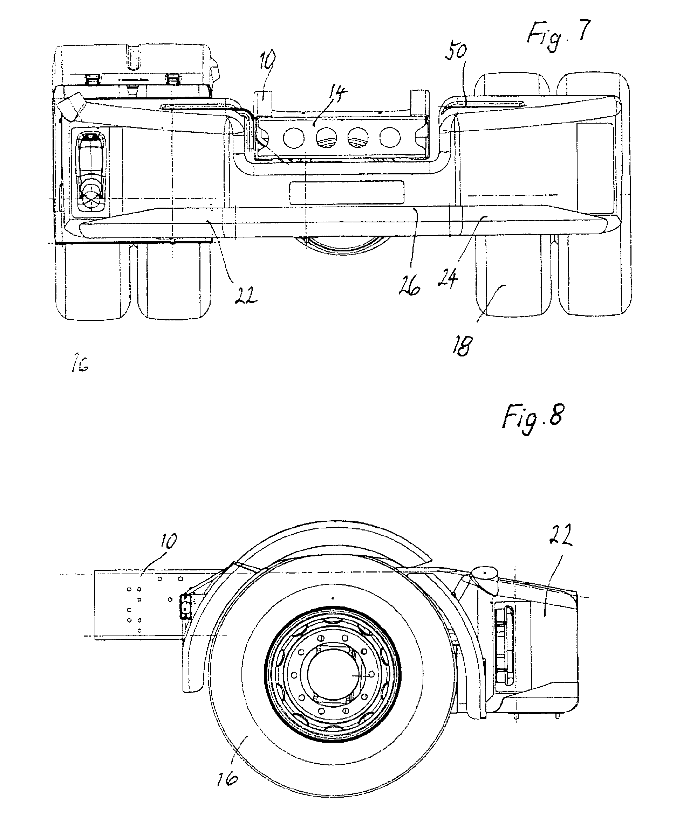

The essential difference between the embodiment according to Figs. 5 to 8 and that according to Figs. 1 to 4 is that the tank, with both fuel tanks 22, 24 and the bridging section 26, is rounded at the rear end, as viewed from above. The rear area is less angular than in the first embodiment so that there is, for example, less danger of damaging the corners on fixed objects when reversing the vehicle. The arrangement according to Figs. 5 to 8 is particularly attractive optically.

In the embodiment according to Fig. 5 there is again a suitable connection between both fuel tanks 22, 24 and the rear sections 42 of the mud flap.

Mounting plates are designated 48, 50 by means of which both fuel tanks and thereby the whole tank assembly are attached to the rear ends of the longitudinal members 10, 12.

## Claims

1. Tank assembly for tractors of articulated vehicles, comprising at least one fuel tank attached to a chassis frame (10. 12) of the tractor of the articulated vehicle behind rear wheels (18, 20) of the tractor **characterised in that** there are provided at least two fuel tanks (22, 24, 26) attached respectively on each side of rear ends of the longitudinal members (10, 12) of the chassis frame (10, 12).

2. Tank assembly according to Claim 1, **characterised in that** the fuel tanks (22, 24) are connected to form a unit by means of a bridging section (26) which runs beneath the rear end of the longitudinal members (10, 12).

3. Tank assembly according to Claim 1 or 2, **characterised in that** the rear ends of the longitudinal members (10, 12) are joined by means of a connecting section (14).

4. Tank assembly according to Claim 2 or 3, **characterised in that** a reinforcing rail for the reinforcement of the tank (22, 24, 26) at the rear end of the tractor is attached to or integrated into the lower rear section of the tank.

## Patentansprüche

1. Tankaufbau für Zugmaschinen von Sattelfahrzeugen, umfassend wenigstens einen Kraftstoffbehälter, der an einem Chassisrahmen (10, 12) der Zugmaschine eines Sattelfahrzeugs hinter den Hinterrädern (18, 20) der Zugmaschine angeordnet ist, **dadurch gekennzeichnet, dass** wenigstens zwei Kraftstoffbehälter (22, 24, 26) vorgesehen sind, die entsprechend an jeder Seite der Hinterenden längslaufender Elemente (10, 12) des Chassisrahmens (10, 12) angebracht sind.

2. Tankaufbau nach Anspruch 1, **dadurch gekennzeichnet, dass** die Kraftstoffbehälter (22, 24) zur Bildung einer Einheit mittels eines Brückenabschnitts (26), der unter dem Hinterende der längslaufenden Elemente (10, 12) verläuft, verbunden sind.

3. Tankaufbau nach einem der Ansprüche 1 oder 2, **dadurch gekennzeichnet, dass** die Hinterenden der längslaufenden Elemente (10, 12) mittels eines Verbindungsabschnitts (14) verbunden sind.

4. Tankaufbau nach Anspruch 2 oder 3, **dadurch gekennzeichnet, dass** eine verstärkende Schiene zur Verstärkung der Behälter (22, 24, 26) am Hinterende der Zugmaschine angebracht ist oder in den unteren Hinterabschnitt des Tanks integriert ist.

## Revendications

1. Ensemble réservoir pour des tracteurs de véhicules articulés, comprenant au moins un réservoir de carburant fixé à un cadre de châssis (10, 12) du tracteur du véhicule articulé derrière les roues arrière (18, 20) du tracteur, **caractérisé en ce que** sont prévus au moins deux réservoirs de carburant (22, 24, 26) fixés respectivement sur chaque côté des extrémités arrière des éléments longitudinaux (10, 12) du cadre de châssis (10, 12).

2. Ensemble réservoir selon la revendication 1, **caractérisé en ce que** les réservoirs de carburant (22, 24) sont reliés pour former une unité au moyen d'une section de pontage (26) qui s'étend en dessous de l'extrémité arrière des éléments longitudinaux (10, 12).

3. Ensemble réservoir selon la revendication 1 ou 2, **caractérisé en ce que** les extrémités arrière des éléments longitudinaux (10, 12) sont reliées au moyen d'une section de connexion (14).

4. Ensemble réservoir selon la revendication 2 ou 3, **caractérisé en ce qu'**un rail de renforcement pour le renforcement du réservoir (22, 24, 26) à l'extrémité arrière du tracteur est fixé à ou intégré dans la section arrière inférieure du réservoir.
